# EUROPEAN PATENT APPLICATION

(11) **EP 0 820 970 A2**
(43) Date of publication of application: **28.01.1998**
(21) Application number: 97110206.6
(22) Date of filing: 23.06.1997
(51) Int. Cl.: C05F 17/00, C05F 9/04, C05G 1/00, C05F 11/08

(54) **Production process and methodology for a nutritive-synergetic biological complex, a bio-activator for microbiological activity in organic and organic-chemical materials**

(30) Priority: 25.06.1996 IT TO960538
(71) Applicant: MARCOPOLO ENGINEERING S.r.l., I-12011 Borgo San Dalmazzo (CN) (IT)
(72) Inventor: The designation of the inventor has not yet been filed

(57) **Abstract**

There is disclosed a production process for a nutritive-synergetic catalyzing biological complex, a bio-activator for microbiological activity in organic and organic-chemical materials endowed with improved characteristics for reducing evil-smells and pollutant levels.

## Description

This invention refers to an original production process for a catalyzing biological complex. The originality of this complex lies principally in its ingredients and the method of preparation and activation of its fundamental active component, known as the metabolic substrate and of vegetative origin. It is known that bio-activators, products which are added in small percentages to materials for treatment in order to activate and accelerate their natural biodegradation, are employed in all sectors involved with organic and organic-chemical materials: environmental sectors in general, reclamation (following pollution caused by hydrocarbons, toxic-poisonous or organic substances), tips, purification plant, composting, zootechny, agriculture, agroindustrial sector, industry, etc.

The objective of this invention is a special production process for a nutritive-synergetic catalyzing biological complex, a bio-activator for microbiological activity in organic and organic-chemical materials endowed with improved characteristics for reducing evil-smells and pollutant levels. The use of specific raw materials and the special sequence of stages in which they are activated allows a product with a greater bioactivation capability to be manufactured. This product is then opportunely integrated with other components, acquired on the open market and with known biological properties (growth factors, mineral salts, glucides, yeasts, etc.) to create the final product for marketing, in various packaging formats and for various sectors of application; more specifically, where necessary, the product will be integrated with specialized strains of bacteria.

### - Metabolic substrate preparation methodology.

### - Raw material:

1) Vegetable support base composed of maize flour, soya flour, corn steep, olive husk, grape-husk, beetroot distillation residues, yeast distillation residues, cream of tartar, crushed hardwood leaves and branches, peat, mountain herbs, pharmaceutical flowers and herbs, seaweed, roots and barks, vegetable oils. These raw materials are commercialized but not necessarily for this specific application.
2) Nutritive and growth factors: natural yeast for fermenting (Saccaromyces), vitaminized yeast, amino acids, glucides, micro-element rich mineral salts (Atlantic type salts).
3) Mature organic nucleus (starter), composed of mature humus (for example, that produced by the Bertolotto company of Scarnafigi - CN, Italy) microbe cultures based on natural bacteria and not mutants, natural yeast extracts, corn steep, soya flour, maize flour, mineral salts, trace elements, vitamin factors, glucides, amino acids, bee-glue powder. The organic nucleus (starter), composed of a precise mixture of the above indicated components, is matured in a closed environment (using a special fermenter), for at least 7 days at a controlled temperature of 55/58 degrees centigrade and 50/55% humidity. It then undergoes a controlled thermal treatment, at a temperature of 67°C and 55% minimum humidity, which lasts 180 minutes. Upon termination of this treatment, the mature organic nucleus (starter) is sanitized (absence of pathogenic microbes) and possesses a high biological charge. Everything is monitored and analyzed.

The vegetable support base (composed of all of the above nominated materials or part thereof, mixed in variable percentages via a suitable mechanical mixer) constitutes 96-97% of the raw materials that form the metabolic substrate. The nutritive and growth factors constitute another 2-3%. The nucleus (starter) constitutes the final 1-2%.

### - Process description:

The raw materials are mixed in the above indicate percentages, using a suitable mechanical mixer, until a good level of homogeneity is reached. They are then activated, humidified, matured and stabilized with multiple-stage anaerobic and aerobic fermentation according to the procedure described below. Fermentation is carried out in specially prepared environments in order to avoid external pollutants compromising the process.

### - First Stage (homogenization and first activation)

During the homogenization phase, the above specified raw materials are uniformly mixed according to the indicated proportions. With regards to the material known as the starter nucleus, 9/10 is mixed as is with the other materials, while the remaining 1/10 portion is dissolved in tepid water at 42°C and seeded in the liquid form by introducing anaerobic bacteria with pharmaceutical enzymes and coenzymes, using the same system as cited in Patent N° 1187998, dated 21.4.1986. The active organic liquid that is obtained is then evenly spread over the material that is to undergo the subsequent stages, thus effecting the first activation.

### - Second Stage (anaerobic)

This consists in the static anaerobic fermentation of the material heaped in a mound, which can vary in size.

This material is first sprayed with a water based solution containing 1-2% fermentable sugars and 1% castor oil acid esters in emulsion. It is then covered with a watertight tarpaulin and left to stand for at least 60 days. The tarpaulin can be fitted with an air valve equipped with a non-return device to avoid eventual pressure build-ups.

### - Third Stage (static aerobic)

The tarpaulin is removed at the end of the second stage and the material thoroughly turned over by mechanical means. Whilst the material is turning over, it is constantly and uniformly sprayed with nebulized water containing 1% castor oil acid esters to avoid eventual anomalous degradation processes. When turning over is completed, the material is left to mature in the static aerobic phase for 20-25 days.

### - Fourth Stage (second activation and forced aerobic phase)

The amount of material (arriving from the third stage) subjected to this treatment is variable. It is preferable to work on small quantities, extracted each time from the third stage heap, for ease of processing.

The quantity of extracted material is activated by introducing aerobic bacteria with enzymes and coenzymes (enzymatic biological culture) using the following technique:

The enzymatic biological culture is dissolved in water (at 42°C) 12 hours before application. A small portion of material extracted from the third stage heap is also added to the water solution to obtain a synergetic action between the enzymes in the enzymatic biological culture and the microorganisms and enzymes that form the metabolic charge of the organic material that has already undergone two fermentation stages (second and third).

The proportions are as follows:
- 1% enzymatic biological culture
- 4% material extracted from second stage heap
- 95% deionized water

After being agitated at a constant temperature of 42°C for 12 hours, the above specified solution is sprayed on the material to be processed in the fourth stage (second activation).

The forced aerobic maturing phase then takes place in a closed area and at a controlled temperature, using a heat convector which, in addition to continually passing air into the organic mass, ensures that the air's temperature does not drop below 55°C.

The mass's humidity is kept above a minimum of 45% by repeated spraying with tepid drinkable water. This phase lasts 120 hours. When the maturing stages are completed, the matured product is then dried at low temperature, ground with a special mill and finely sifted using a centrifugal sieve.

At this point, the metabolic substrate, of vegetable origins and prepared as indicated above, is ready for mixing with the other necessary ingredients for making the final product. This can then be marketed in the various packaging formats referred to in the introduction for the various sectors of application. The other ingredients indicated are acquired on the open market and have known biological properties (growth factors, mineral salts, glucides, yeasts, specialized microbe cultures, etc.).

The metabolic substrate and the other ingredients are fed by a screw feeder to a mixer for forming a highly homogenous product that after opportune quality controls can be packaged as a powder or, after being dissolved in water, as a liquid.

## Claims

1. Production process and methodology for a nutritive-synergetic catalyzing biological complex, a bio-activator for microbiological activity in organic and organic-chemical materials endowed with improved characteristics for reducing evil-smells and pollutant levels.

2. Production process and methodology according to claim 1, characterized by the use of specific raw materials and the special sequence of stages in which they are activated.

3. Production process and methodology according to claim 1, characterized by a vegetable support base constituting 96-97% of the total, nutritive and growth factors constituting 2-3% of the total and a mature organic nucleus (starter) constituting 1-2% of the total.

4. Production process and methodology according to claim 1 and 3, characterized by a first stage of processing consisting in homogenization and first activation, during which the raw materials are mixed in the indicated proportions, as 9/10 of the material known as the starter nucleus is mixed as is with the other materials, while the remaining 1/10 portion is dissolved in tepid water at 42°C and seeded in the liquid form by introducing anaerobic bacteria with pharmaceutical enzymes and coenzymes.

5. Production process and methodology according to claim 1, 3 and 4, characterized by a second anaerobic processing stage consisting in the static anaerobic fermentation of the material heaped in a large mound, as this material is sprayed with a water based solution containing 1-2% fermentable sugars and 1% castor oil acid esters in emulsion and the mound is covered with a watertight tarpaulin and left to stand for at least 60 days.

6. Production process and methodology according to claim 1, 3, 4 and 5, characterized by a third processing stage consisting in the removal of the tarpaulin and a static aerobic maturing lasting 20-25 days.

7. Production process and methodology according to claim 1, 3, 4, 5 and 6, characterized by a fourth processing stage consisting in the activation of the mass being processed by introducing aerobic bacteria with enzymes and coenzymes, as the mass is left to mature in a forced aerobic phase in a closed area and at a controlled temperature, using a heat convector which, in addition to continually passing air into the organic mass, ensures that the air's temperature does not drop below 55°C, as the mass's humidity is kept above a minimum of 45% by repeated spraying with tepid water, as this phase lasts for 120 hours.
